# EUROPEAN PATENT APPLICATION

(11) **EP 4 768 377 A1**
(43) Date of publication of application: **01.07.2026**
(21) Application number: 25169711.6
(22) Date of filing: 10.04.2025
(51) Int. Cl.: B62K 7/04, B62K 21/18

(54) **BICYCLE**

(30) Priority: 26.12.2024 TW 113150934
(71) Applicant: GronBla CO., LTD., Taichung City 407 (TW)
(72) Inventor: RASMUSSEN, Bjarke, 407 Taichung City (TW); JIAN, Ming-Wei, 407 Taichung City (TW); KUO, Wen-Chang, 407 Taichung City (TW); LIAO, Yi-Cheng, 407 Taichung City (TW)
(74) Representative: Cabinet Chaillot

(57) **Abstract**

A bicycle (100) includes a bicycle body (20) and a steering system (40). The bicycle body (20) includes a frame (22), a rear wheel (24), and a front wheel (26). The frame (22) includes a frame body (222), a cargo rack (224), and a fork (226) that are connected in sequence from a rear to a front. The rear wheel (24) is engaged with a rear side of the frame body (222). A front side of the frame body (222) has an axial tube (222a). The cargo rack (224) is pivotally connected to the front side of the frame body (222). A front side of the cargo rack (224) has a head tube (224a). The fork (226) rotatably passes through the head tube (224a). The front wheel (26) is engaged with the fork (226). The steering system (40) includes a steering shaft (41), a handle bar (43), and a coupling device (42). The steering shaft (41) rotatably passes through the axial tube (222a). The handle bar (43) is engaged with a top end of the steering shaft (41). The coupling device (42) is connected to the steering shaft (41) and the fork (226).

## Description

### BACKGROUND OF THE INVENTION

### Technical Field

The present invention relates generally to a bicycle, and more particularly to a bicycle with a cargo rack.

### Description of Related Art

It is known that bicycles, which were initially used as a transportation device with the sole function of carrying riders, have been evolved to have a function of carrying cargo for short-distance transportation. A bicycle body of a bicycle is provided with a frame and a cargo rack for receiving cargo. The cargo rack is typically located between a handle bar and a head tube.

However, the bicycle body of the bicycle with the cargo rack is generally longer than a commuting bicycle. When a user controls the handle bar to steer, the handle bar pivots along with a fork, so that a front wheel drives the cargo rack and the frame to steer. As a result, a turning radius of the bicycle with the cargo rack is greater than a turning radius of the commuting bicycle, so that the turning flexibility of the bicycle with the cargo rack is poor, thereby increasing the risk of colliding with other vehicles or passengers.

### BRIEF SUMMARY OF THE INVENTION

In view of the above, the primary objective of the present invention is to provide a bicycle, wherein with the design of a steering system, a steering shaft and a fork turns in an identical direction.

The present invention provides a bicycle including a bicycle body and a steering system. The bicycle body includes a frame, a rear wheel, and a front wheel. The frame includes a frame body, a cargo rack, and a fork that are connected in sequence from a rear to a front. The rear wheel is engaged with a rear side of the frame body. A front side of the frame body has an axial tube. The cargo rack is pivotally connected to the front side of the frame body. A front side of the cargo rack has a head tube. The fork rotatably passes through the head tube. The front wheel is engaged with the fork. The steering system includes a steering shaft, a handle bar, and a coupling device. The steering shaft rotatably passes through the axial tube. The handle bar is engaged with a top end of the steering shaft. The coupling device is connected to the steering shaft and the fork and are configured to drive the steering shaft and the fork to turn in an identical direction.

With the aforementioned design, the steering shaft drives the fork through the coupling device to turn in the identical direction, so that the fork drives the front wheel to turn. In this way, the cargo rack could turn relative to the frame body, so that the turning radius of the bicycle is reduced, thereby improving the turning flexibility of the bicycle.

### BRIEF DESCRIPTION OF THE SEVERAL VIEWS OF THE DRAWINGS

The present invention will be best understood by referring to the following detailed description of some illustrative embodiments in conjunction with the accompanying drawings, in which
FIG. 1 is a perspective view of the bicycle according to an embodiment of the present invention;
FIG. 2 is a side view of the bicycle according to the embodiment of the present invention;
FIG. 3 is a top view of the bicycle according to the embodiment of the present invention;
FIG. 4 is a sectional view along the 4-4 line in FIG. 3;
FIG. 5 is an enlarged view of a marked region A1 in FIG. 4;
FIG. 6 is a schematic view of the steering system and the fork according to the embodiment of the present invention;
FIG. 7 is an enlarged view of a marked region A2 in FIG. 6;
FIG. 8 is an enlarged view of a marked region A3 in FIG. 6; and
FIG. 9 is a sectional view along the 9-9 line in FIG. 3.

### DETAILED DESCRIPTION OF THE INVENTION

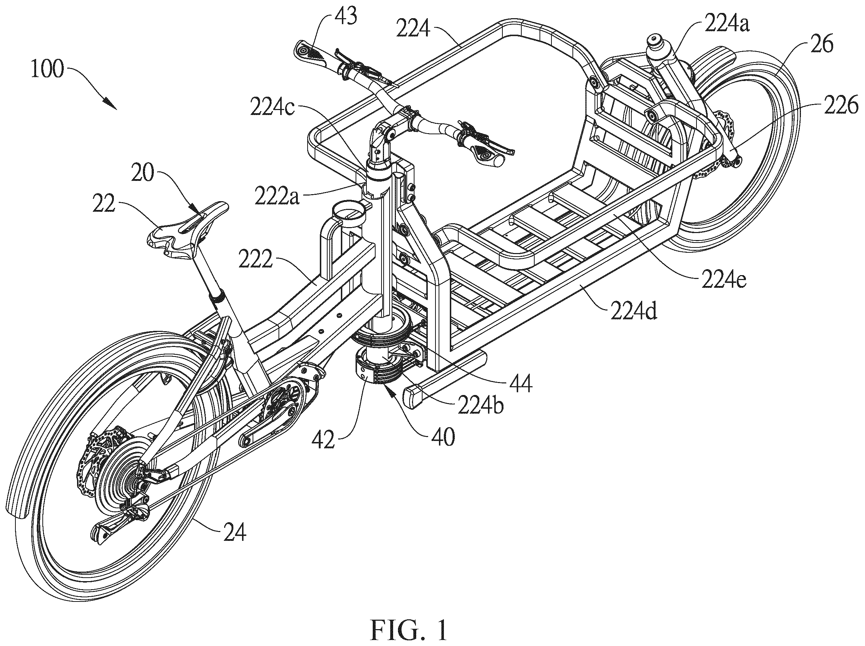

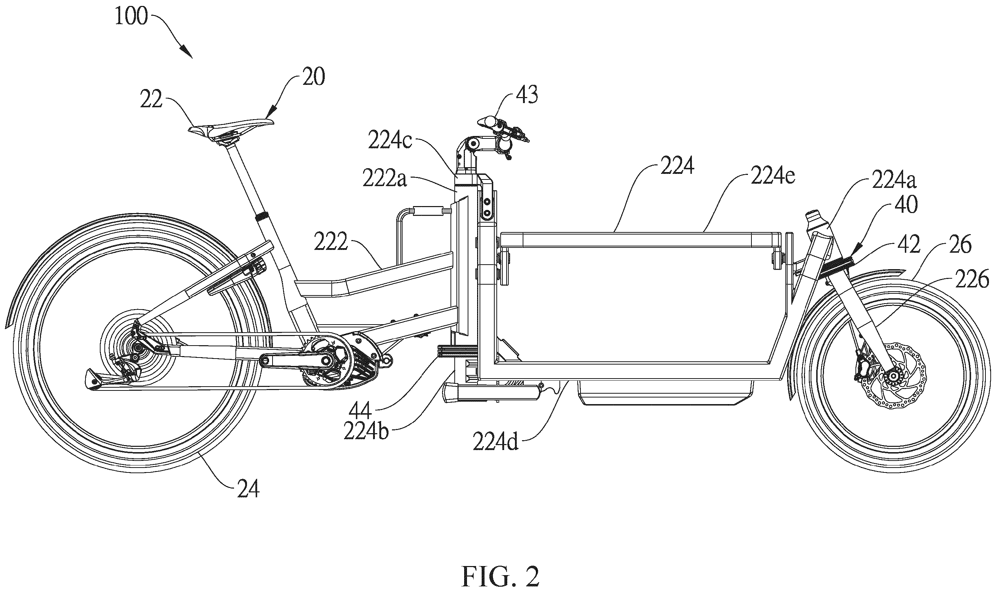

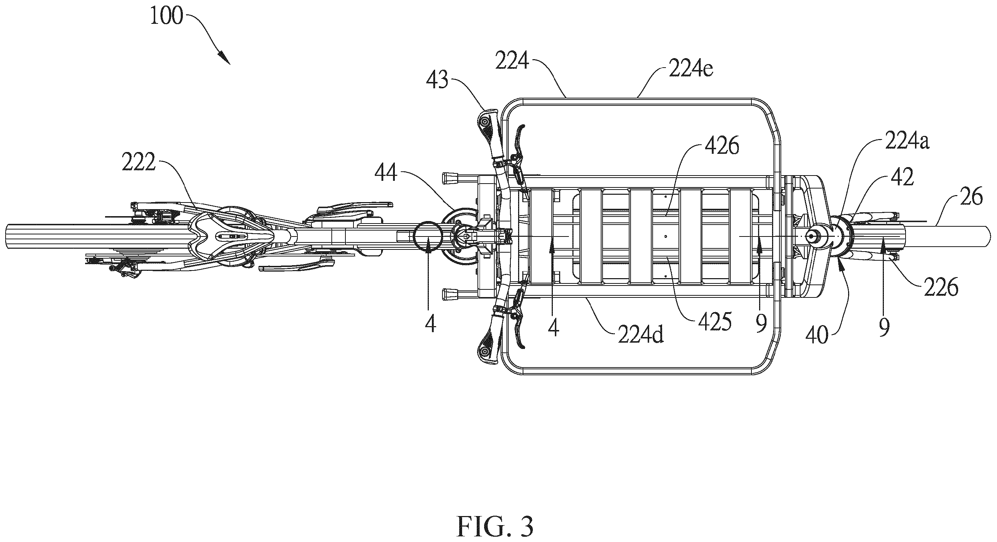

A bicycle 100 according to an embodiment of the present invention is illustrated in FIG. 1 to FIG. 3 and includes a bicycle body 20 and a steering system 40. In the current embodiment, the bicycle 100 is an electric assistant bicycle, but not limited thereto.

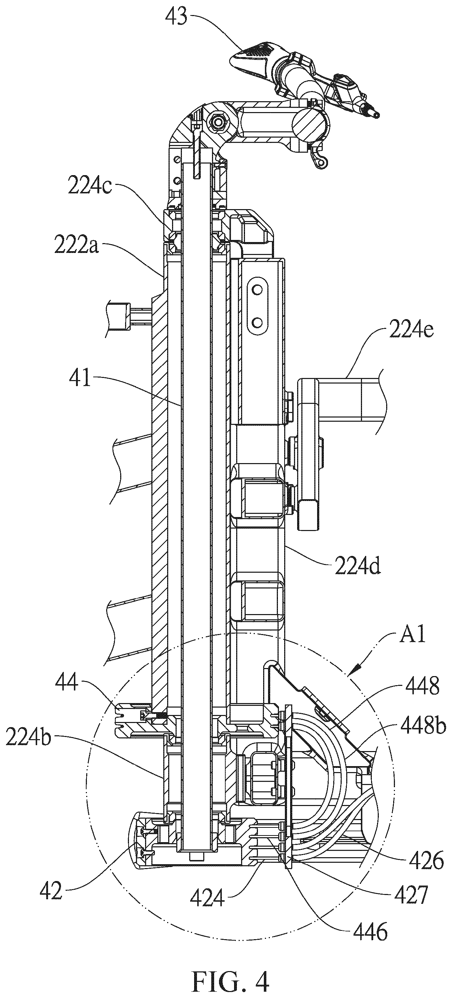

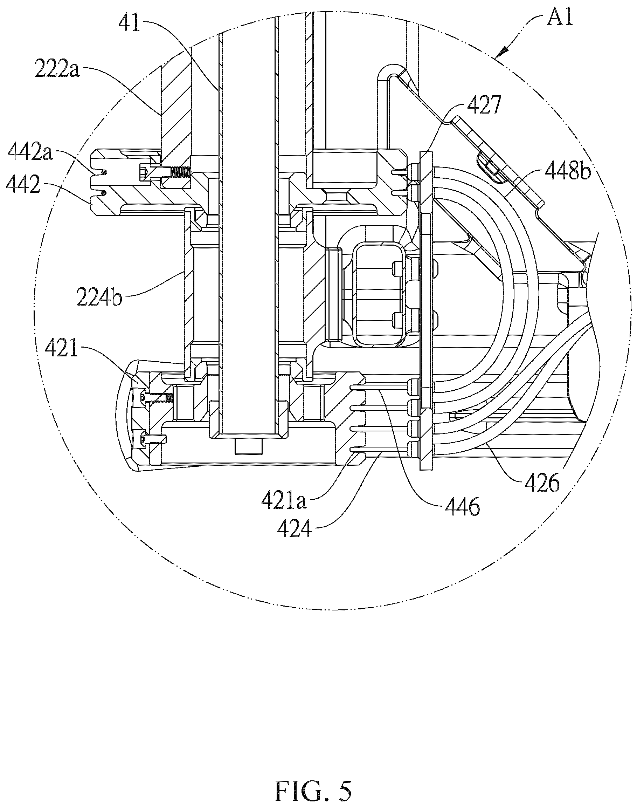

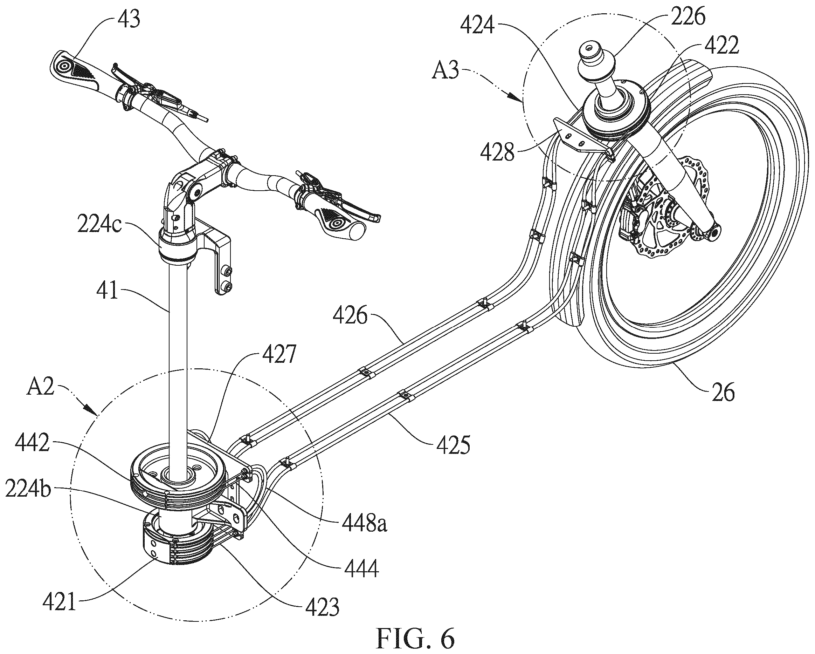

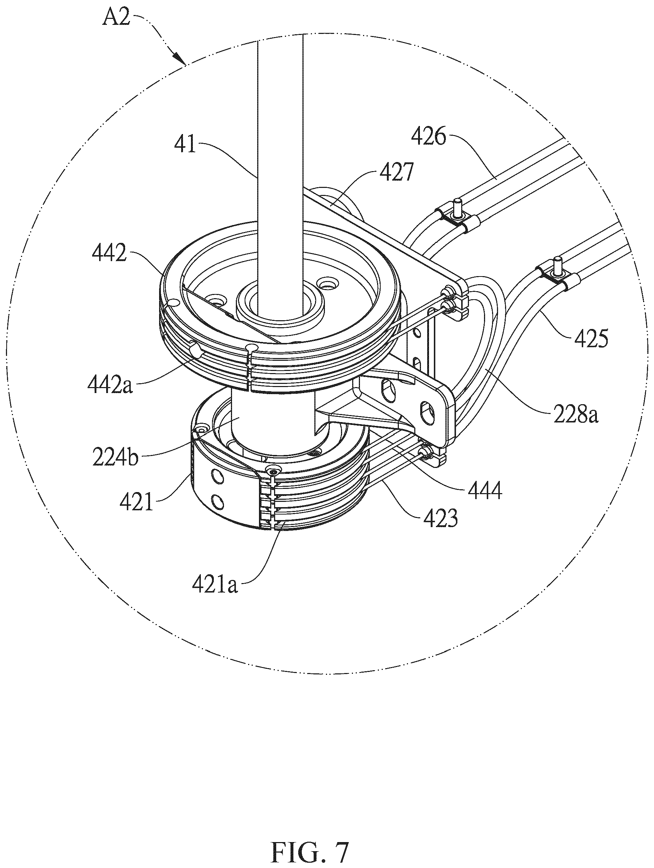

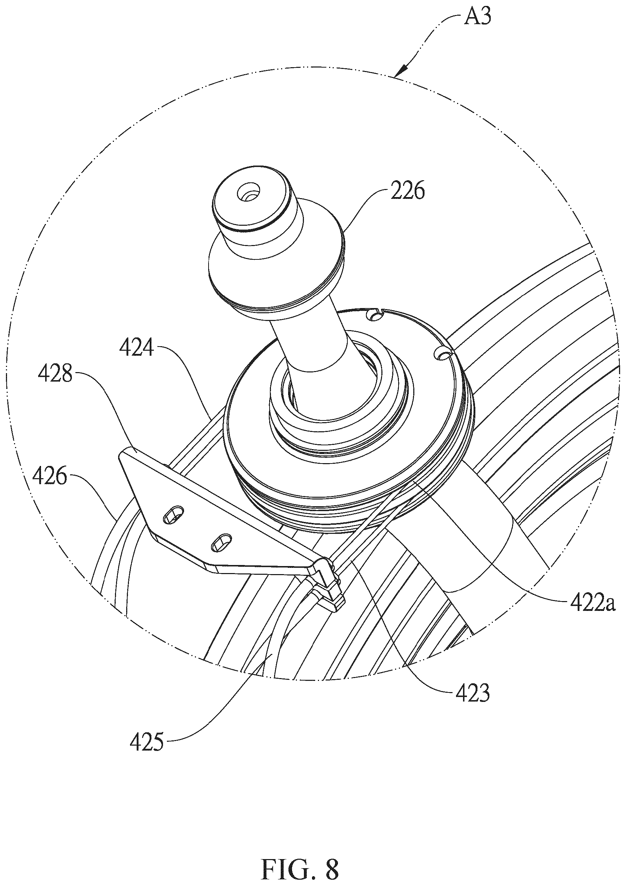

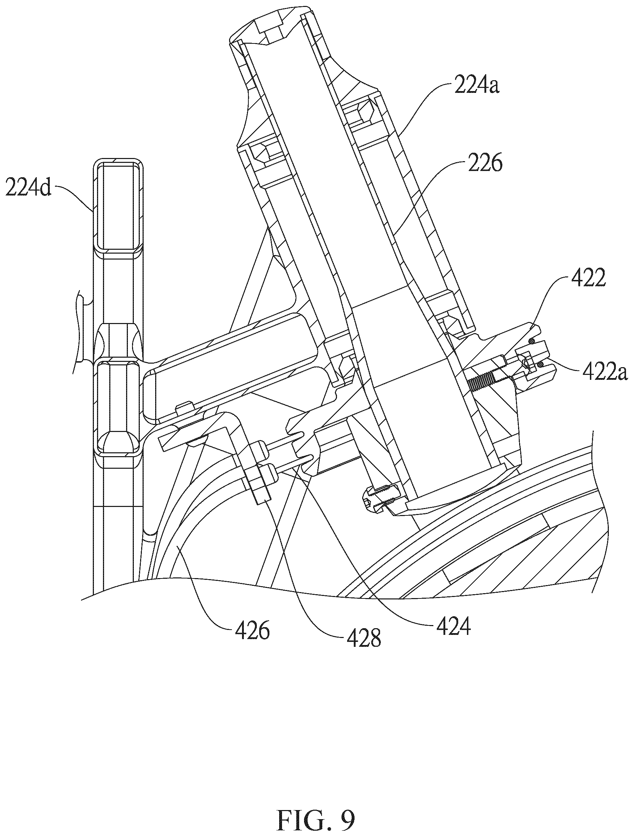

Referring to FIG. 1 and FIG. 4 to FIG. 9, the bicycle body 20 includes a frame 22, a rear wheel 24, and a front wheel 26. The frame 22 includes a frame body 222, a cargo rack 224, and a fork 226 that are connected in sequence from a rear to a front. The rear wheel 24 is engaged with a rear side of the frame body 222. A front side of the frame body 222 has an axial tube 222a. A front side of the cargo rack 224 has a head tube 224a. The fork 226 rotatably passes through the head tube 224a. The front wheel 26 is engaged with the fork 226. The cargo rack 224 includes a first axial sleeve 224b, a second axial sleeve 224c, a base 224d, and two expandable rods 224e. The axial tube 222a is located between the first axial sleeve 224b and the second axial sleeve 224c. The first axial sleeve 224b is coaxially disposed on a bottom end of the axial tube 222a and is rotatable relative to the axial tube 222a. The second axial sleeve 224c is coaxially disposed on a top end of the axial tube 222a and is rotatable relative to the axial tube 222a. A front side of the base 224d is connected to the head tube 224a. A rear side of the base 224d is connected to the first axial sleeve 224b and the second axial sleeve 224c. The base 224d is pivotally connected to the front side of the frame body 222 through the first axial sleeve 224b and the second axial sleeve 224c. Two ends of each of the expandable rods 224e are pivotally connected to the base 224d, so that the two expandable rods 224e could be retracted downwards and be expanded upwards to according to different requirements.

The steering system 40 includes a steering shaft 41, a coupling device 42, a handle bar 43, and a cargo rack steering device 44. The steering shaft 41 rotatably passes through the axial tube 222a, the first axial sleeve 224b, and the second axial sleeve 224c, so that the first axial sleeve 224b is coaxially disposed on the bottom end of the axial tube 222a, and the second axial sleeve 224c is coaxially disposed on the top end of the axial tube 222a. In other embodiments, the base 224d could be rotatably connected to the head tube 224a through other hinge structures. The handle bar 43 is engaged with a top end of the steering shaft 41. The coupling device 42 includes a first reel 421, a second reel 422, at least one first right cable 423, at least one first left cable 424, at least one first right sleeve 425, at least one first left sleeve 426, a first fixing plate 427, and a second fixing plate 428.

The first reel 421 is a circular disk and a center of the first reel 421 is connected to a bottom end of the steering shaft 41. The first reel 421 has at least two first grooves 421a. The at least two first grooves 421a are located on a peripheral surface of the first reel 421. The second reel 422 is a circular disk and is fixedly fitted around the fork 226. The second reel 422 has at least one second groove 422a. The at least one second groove 422a is located on a peripheral surface of the second reel 422. An outer diameter of the first reel 421 is equal to an outer diameter of the second reel 422. An end of the at least one first right cable 423 is connected to a right side of the first reel 421. A part of the at least one first right cable 423 adjacently connected to the first reel 421 is located in the at least two first grooves 421a. Another end of the at least one first right cable 423 is connected to a right side of the second reel 422. A part of the at least one first right cable 423 adjacently connected to the second reel 422 is located in the at least one second groove 422a. An end of the at least one first left cable 424 is connected to a left side of the first reel 421. A part of the first left cable 424 adjacently connected to the first reel 421 is located in the at least two first grooves 421a. Another end of the at least one first left cable 424 is connected to a left side of the second reel 422. A part of the at least one first left cable 424 adjacently connected to the second reel 422 is located in the at least one second groove 422a.

The at least one first right sleeve 425 and the at least one first left sleeve 426 are connected to a bottom side of the base 224d. An end of the at least one first right sleeve 425 is connected to a right side of the first fixing plate 427. Another end of the at least one first right sleeve 425 is connected to a right side of the second fixing plate 428. The at least one first right cable 423 slidably passes through the at least one first right sleeve 425. An end of the at least one first left sleeve 426 is connected to a left side of the first fixing plate 427. Another end of the at least one first left sleeve 426 is connected to a left side of the second fixing plate 428. The at least one first left cable 424 slidably passes through the at least one first left sleeve 426. The first fixing plate 427 and the second fixing plate 428 are connected to the rear side and the front side of the base 224d, respectively.

In the current embodiment, the at least one first right cable 423 and the at least one first left cable 424 are steel cables; numbers of the at least one first right cable 423, the at least one first right sleeve 425, the at least one first left cable 424, the at least one first left sleeve 426, and the at least one second groove 422a are the same and are two. In other embodiments, the numbers of the at least one first right cable 423, the at least one first right sleeve 425, the at least one first left cable 424, the at least one first left sleeve 426, and the at least one second groove 422a could be adjusted to one, three, or more to meet different requirements, as long as the numbers of the at least one first right cable 423, the at least one first right sleeve 425, the at least one first left cable 424, the at least one first left sleeve 426, and the at least one second groove 422a are the same.

The cargo rack steering device 44 includes a third reel 442, at least one second right cable 444, at least one second left cable 446, and a guiding structure 448. The third reel 442 is a circular disk and is fixedly fitted around the axial tube 222a. The third reel 442 has at least one third groove 442a. The at least one third groove 442a is located on a peripheral surface of the third reel 442. An outer diameter of the third reel 442 is greater than the outer diameter of the first reel 421. An end of the at least one second right cable 444 is connected to the right side of the first reel 421. A part of the at least one second right cable 444 adjacently connected to the first reel 421 is located in the at least two first grooves 421a. Another end of the at least one second right cable 444 is connected to a right side of the third reel 442. A part of the at least one second right cable 444 adjacently connected to the third reel 442 is located in the at least one third groove 442a. An end of the at least one second left cable 446 is connected to the left side of the first reel 421. A part of the at least one second left cable 446 adjacently connected to the first reel 421 is located in the at least two first grooves 421a. Another end of the at least one second left cable 446 is connected to a left side of the third reel 442. A part of the at least one second left cable 446 adjacently connected to the third reel 442 is located in the at least one third groove 442a.

The guiding structure 448 is engaged with the rear side of the base 224d. The at least one second right cable 444 and the at least one second left cable 446 are slidably disposed in the guiding structure 448. The guiding structure 448 includes at least one second right sleeve 448a and at least one second left sleeve 448b. An end of the at least one second right sleeve 448a and an end of the at least one second left sleeve 448b are connected to a top side of the first fixing plate 427. Another end of the at least one second right sleeve 448a and another end of the at least one second left sleeve 448b are connected to a bottom side of the first fixing plate 427. The at least one second right cable 444 slidably passes through the at least one second right sleeve 448a. The at least one second left cable 446 slidably passes through the at least one second left sleeve 448b.

In the current embodiment, numbers of the at least one second right cable 444, the at least one second left cable 446, the at least one second right sleeve 448a, the at least one second left sleeve 448b, and the at least one third groove 442a are the same and are two; a number of the at least two first grooves 421a is equal to a sum of the number of the at least one first right cable 423 and the number of the at least one second right cable 444 and is four. In other embodiments, the numbers of the at least one second right cable 444, the at least one second left cable 446, the at least one second right sleeve 448a, the at least one second left sleeve 448b, and the at least one third groove 442a could be adjusted to one, three, or more to meet different requirements, as long as the numbers of the at least one second right cable 444, the at least one second left cable 446, the at least one second right sleeve 448a, the at least one second left sleeve 448b, and the at least one third groove 442a are the same.

In practice, when the bicycle 100 turns right, the handle bar 43 drives the first reel 421 to turn right through the steering shaft 41, so that a part of each of the first right cables 423 is retracted rightwards by the first reel 421 into one of the first grooves 421a that is corresponding, and another part of each of the first right cables 423 are released from one of the second grooves 422a that is corresponding; a part of each of the first left cables 424 is released from one of the first grooves 421a that is corresponding, and another part of each of the first left cables 424 is retracted rightwards by the second reel 422 into one of the second grooves 422a that is corresponding. In other words, the first reel 421 is operatively coupled to the second reel 422 through the two first right cables 423 and the two first left cables 424 to simultaneously turn right, and the second reel 422 drives the fork 226 to pivot right relative to the head tube 224a, so that the front wheel 26 turns right.

At the time that the first reel 421 turns right, as an end of each of the second right cables 444 is fixed to the third reel 442 and a middle section of each of the second right cables 444 passes through each of the second right sleeves 448a, a part of each of the second right cables 444 is retracted rightwards by the first reel 421 into one of the first grooves 421a that is corresponding, so that the guiding structure 448 and the first fixing plate 427 are driven to deviate rightwards relative to the third reel 442, thereby driving the cargo rack 224 to turn right relative to the frame body 222. In this way, when the bicycle 100 turns right, the front wheel 26 and the cargo rack 224 could turn right simultaneously, so that a turning radius of the bicycle 100 could be reduced, thereby improving the turning flexibility of the bicycle 100. Accordingly, when a part of each of the second right cables 444 is retracted by the first reel 421, a part of each of the second left cables 446 is released from one of the first grooves 421a that is corresponding, so that the two released second left cable 446 do not interrupt the cargo rack 224.

When the bicycle 100 turns left, the handle bar 43 drives the first reel 421 to turn left through the steering shaft 41, so that a part of each of the first left cables 424 is retracted leftwards by the first reel 421 into one of the first grooves 421a that is corresponding, and another part of each of the first left cables 424 is released from one of the second grooves 422a that is corresponding; a part of each of the first right cables 423 is released from one of the first grooves 421a that is corresponding, and another part of each of the first right cables 423 is retracted leftwards by the second reel 422 into one of the second grooves 422a that is corresponding. In other words, the first reel 421 is operatively coupled to the second reel 422 through the two first right cables 423 and the two first left cables 424 to simultaneously turn left, and the second reel 422 drives the fork 226 to pivot left relative to the head tube 224a, so that the front wheel 26 turns left.

At the time that the first reel 421 turns left, as an end of each of the second left cables 446 is fixed to the third reel 442 and a middle section of each of the second left cables 446 passes through each of the second left sleeves 448b, a part of each of the second left cables 446 is retracted leftwards by the first reel 421 into one of the first grooves 421a that is corresponding, so that the guiding structure 448 and the first fixing plate 427 are driven to deviate rightwards relative to the third reel 442, thereby driving the cargo rack 224 to turn left relative to the frame body 222. In this way, when the bicycle 100 turns left, the front wheel 26 and the cargo rack 224 could turn left simultaneously, so that the turning radius of the bicycle 100 could be reduced, thereby improving the turning flexibility of the bicycle 100. Accordingly, when a part of each of the second left cables 446 is retracted by the first reel 421, a part of each of the second right cables 444 is released from one of the first grooves 421a that is corresponding, so that the two released second right cables 444 do not interrupt the cargo rack 224.

With the design of the coupling device 42 and the cargo rack steering device 44, the first reel 421 is operatively coupled to the second reel 422 through the two first right cables 423 and the two first left cables 424 to turn simultaneously, so that the second reel 422 drives the fork 226 to pivot relative to the head tube 224a, thereby driving the front wheel 26 to turn. Moreover, the first reel 421 drives the guiding structure 448 and the first fixing plate 427 to deviate relative to the third reel 442 through the two second right cables 444 and the two second left cables 446, thereby driving the cargo rack 224 to turn relative to the frame body 222. In this way, the turning radius of the bicycle 100 is reduced, thereby improving the turning flexibility of the bicycle 100.

## Claims

1. A bicycle (100), comprising:
a bicycle body (20), comprising a frame (22), a rear wheel (24), and a front wheel (26), wherein the frame (22) comprises a frame body (222), a cargo rack (224), and a fork (226) that are connected in sequence from a rear to a front; the rear wheel (24) is engaged with a rear side of the frame body (222); a front side of the frame body (222) has an axial tube (222a); the cargo rack (224) is pivotally connected to the front side of the frame body (222); a front side of the cargo rack (224) has a head tube (224a); the fork (226) rotatably passes through the head tube (224a); the front wheel (26) is engaged with the fork (226);
a steering system (40), comprising a steering shaft (41), a handle bar (43), and a coupling device (42), wherein the steering shaft (41) rotatably passes through the axial tube (222a); the handle bar (43) is engaged with a top end of the steering shaft (41); the coupling device (42) is connected to the steering shaft (41) and the fork (226) and is configured to drive the steering shaft (41) and the fork (226) to turn in an identical direction.

2. The bicycle (100) as claimed in claim 1, wherein the cargo rack (224) comprises a first axial sleeve (224b) and a second axial sleeve (224c); the first axial sleeve (224b) and the second axial sleeve (224c) are rotatably fitted around the steering shaft (41); the axial tube (222a) is located between the first axial sleeve (224b) and the second axial sleeve (224c).

3. The bicycle (100) as claimed in claim 2, wherein the cargo rack (224) comprises a base (224d) and two expandable rods (224e); a front side of the base (224d) is connected to the head tube (224a); a rear side of the base (224d) is connected to the first axial sleeve (224b) and the second axial sleeve (224c); two ends of each of the two expandable rods (224e) are pivotally connected to the base (224d).

4. The bicycle (100) as claimed in claim 3, wherein the coupling device (42) comprises a first reel (421), a second reel (422), at least one first right cable (423), and at least one first left cable (424); the first reel (421) is connected to the steering shaft (41) and has at least one first groove (421a); the second reel (422) is connected to the fork (226) and has at least one second groove (422a); an end of the at least one first right cable (423) is connected to a right side of the first reel (421) and is located in the at least one first groove (421a); another end of the at least one first right cable (423) is connected to a right side of the second reel (422) and is located in the at least one second groove (422a); an end of the at least one first left cable (424) is connected to a left side of the first reel (421) and is located in the at least one first groove (421a); another end of the at least one first left cable (424) is connected to a left side of the second reel (422) and is located in the at least one second groove (422a).

5. The bicycle (100) as claimed in claim 4, wherein an outer diameter of the first reel (421) is equal to an outer diameter of the second reel (422).

6. The bicycle (100) as claimed in claim 4, wherein the coupling device (42) comprises at least one first right sleeve (425), at least one first left sleeve (426), a first fixing plate (427), and a second fixing plate (428); the at least one first right sleeve (425) and the at least one first left sleeve (426) are connected to the base (224d); an end of the at least one first right sleeve (425) is connected to a right side of the first fixing plate (427); another end of the at least one first right sleeve (425) is connected to a right side of the second fixing plate (428); the at least one first right cable (423) passes through the at least one first right sleeve (425); an end of the at least one first left sleeve (426) is connected to a left side of the first fixing plate (427); another end of the at least one first left sleeve (426) is connected to a left side of the second fixing plate (428); the at least one first left cable (424) passes through the at least one first left sleeve (426); the first fixing plate (427) and the second fixing plate (428) are connected to the base (224d).

7. The bicycle (100) as claimed in claim 6, wherein the steering system (40) comprises a cargo rack steering device (44); the cargo rack steering device (44) comprises a third reel (442), at least one second right cable (444), at least one second left cable (446), and a guiding structure (448); the third reel (442) is fixed to the axial tube (222a) and has at least one third groove (442a); the at least one first groove (421a) of the first reel (421) comprises at least two first grooves (421a); the end of the at least one first right cable (423) is located in one of the at least two first grooves (421a); an end of the at least one second right cable (444) is connected to the right side of the first reel (421) and is located in the other one of the at least two first grooves (421a); another end of the at least one second right cable (444) is connected to a right side of the third reel (442) and is located in the at least one third groove (442a); the end of the at least one first left cable (424) is located in one of the at least two first grooves (421a); an end of the at least one second left cable (446) is connected to the left side of the first reel (421) and is located in the other one of the at least two first grooves (421a); another end of the at least one second left cable (446) is connected to a left side of the third reel (442) and is located in the at least one third groove (442a); the guiding structure (448) is engaged with the rear side of the base (224d); the at least one second right cable (444) and the at least one second left cable (446) are slidably disposed in the guiding structure (448).

8. The bicycle (100) as claimed in claim 7, wherein an outer diameter of the third reel (442) is greater than the outer diameter of the first reel (421).

9. The bicycle (100) as claimed in claim 7, wherein the guiding structure (448) comprises at least one second right sleeve (448a) and at least one second left sleeve (448b); an end of the at least one second right sleeve (448a) and an end of the at least one second left sleeve (448b) are connected to a top side of the first fixing plate (427); another end of the at least one second right sleeve (448a) and another end of the at least one second left sleeve (448b) are connected to a bottom side of the first fixing plate (427); the at least one second right cable (444) passes through the at least one second right sleeve (448a); the at least one second left cable (446) passes through the at least one second left sleeve (448b).
